## Europäisches Patentamt

(19) **European Patent Office**

**Office européen des brevets**

(11) Numéro de publication: **0 022 727**
**B1**

(12) **FASCICULE DE BREVET EUROPEEN**

(45) Date de publication du fascicule du brevet: **05.12.84**

(21) Numéro de dépôt: **80401060.1**

(22) Date de dépôt: **11.07.80**

(51) Int. Cl.³: **C 03 C 27/12, B 32 B 17/10**

(54) Vitrage feuilleté à intercalaire double.

(30) Priorité: **14.07.79 DE 2928562**

(43) Date de publication de la demande:
**21.01.81 Bulletin 81/03**

(45) Mention de la délivrance du brevet:
**05.12.84 Bulletin 84/49**

(84) Etats contractants désignés:
**BE DE FR GB IT LU SE**

(56) Documents cités:
**FR-A-1 498 571**
**FR-A-2 346 301**
**US-A-3 764 445**

(73) Titulaire: **SAINT-GOBAIN VITRAGE**
**Les Miroirs 18, avenue d'Alsace**
**F-92400 Courbevoie (FR)**
㊽ **BE FR GB IT LU SE**

(73) Titulaire: **VEGLA Vereinigte Glaswerke GmbH**
**Viktoria Allee 3-5**
**D-5100 Aachen (DE)**
㊽ **DE**

(72) Inventeur: **Kunert, Heinz**
**Am Krielerdom 23**
**D-5000 Köln 41 (DE)**

(74) Mandataire: **Eudes, Marcel et al**
**Saint-Gobain Recherche 39 Quai Lucien Lefranc**
**F-93304 Aubervilliers Cedex (FR)**

Courier Press, Leamington Spa, England.

## Description

L'invention a pour objet un vitrage feuilleté, en particulier un pare-brise de véhicule, constitué de deux feuilles de verre silicate assemblées par collage sur une feuille intercalaire comprenant plusieurs couches de matière plastique. On utilise un grand nombre de vitrages feuilletés de sécurité en tant que parebrise de véhicules. Leur feuille intercalaire de matière plastique a un double rôle; d'une part, en cas de rupture du vitrage, elle doit retenir les éclats des feuilles de verre, d'autre part, en cas de projection d'un occupant du véhicule sur le vitrage, elle doit empêcher cet occupant de passer à travers, tout en absorbant de façon adéquate l'énergie cinétique du choc de son corps.

On sait que la capacité de retenir les éclats et la résistance à la pénétration, qui caractérise les propriétés biomécaniques du vitrage feuilleté dépendent dans une large mesure du degré d'adhérence entre l'intercalaire plastique et les feuilles de verre; la capacité de rétention des éclats augmente avec l'adhérence tandis que la résistance à la pénétration et les capacités d'absorption de l'énergie diminuent. On recherche donc un taux d'adhérence moyen conduisant encore à une rétention acceptable des éclats mais sauvegardant une résistance convenable à la pénétration.

Il ne s'agit que d'un compromis qui, en raison de l'action fondamentalement contradictoire de l'adhérence sur les deux caractéristiques de sécurité du vitrage feuilleté, ne conduit ni à des propriétés biomécaniques optimales, ni à une rétention optimale des éclats.

On connait en outre (DE—AS—27 03 785) des vitrages feuilletés dont l'intercalaire est une feuille double, la couche tournée du côté opposé à l'impact des occupants possédant une adhérence élevée sur la feuille de verre adjacente, alors que celle placée du côte opposé a une adhérence moindre sur la feuille de verre correspondante; cette seconde couche est une couche molle de polychlorure de vinyle, tandis que la première n'est qu'une mince pellicule d'une colle spéciale qui n'a d'autre fonction que de la coller sur la feuille de verre. Dans un tel vitrage, l'adhérence élevée de l'intercalaire feuilleté doit contraindre la feuille de verre interne à épouser entièrement la courbure provenant de la déformation, se brisant ainsi en une multiplicité de petits fragments par suite de sa moindre élasticité.

D'autre part, on sait qu'une élévation de la résistance à la pénétration peut résulter d'une augmentation de l'épaisseur de l'intercalaire ou du choix d'un matériau possédant une résistance plus élevée au déchirement. Ces deux mesures ont cependant des inconvénients sur le plan biomécanique car elles conduisent à dépasser le seuil des efforts tolérables par le crâne humain.

L'invention a pour objet de créer un vitrage feuilleté possédant, avec une capacité élevée de rétention des éclats, une résistance à la pénétration augmentée et de meilleures propriétés biomécaniques que les vitrages feuilletés de sécurité connus.

On connaît d'après le brevet FR—1 498 571 un vitrage feuilleté constitué de deux feuilles de verre assemblées à une feuille intercalaire qui dans une réalisation comprend au moins deux couches principales de matière plastique dont les surfaces adhèrent mutuellement, l'adhérence mutuelle de ces surfaces à l'intérieur de l'aire marginale étant plus faible que l'adhérence de l'intercalaire avec les feuilles de verre.

Selon l'invention, l'intercalaire du vitrage feuilleté comprend aussi au moins deux couches principales, mais ici l'adhérence mutuelle sur l'ensemble de leur surface est notablement plus faible que l'adhérence de l'intercalaire sur les feuilles de verre silicate, l'adhérence entre les diverses feuilles de l'intercalaire feuilleté étant comprise entre 10 et 25% de l'adhérence entre cet intercalaire et les feuilles de verre silicate, de sorte qu'un bombage local du vitrage ne détruit pas l'adhérence de l'intercalaire sur les feuilles de verre, et que ce sont les couches principales intercalaires qui se séparent l'une de l'autre.

Un impact sur le vitrage désolidarise donc les deux feuilles de verre ce qui ne pouvait se produire dans le vitrage selon le brevet cité ci-dessus, ensuite, au fur et à mesure que l'effort augmente, les deux couches de l'intercalaire sont à même de faire jouer des capacités d'étirage et de déformation qui correspondent mieux aux propriétés intrinsèques des matériaux qui les constituent; en particulier, elles peuvent atteindre une plus grande extension, de sorte que l'énergie du choc provoqué par l'impact du corps est absorbée sur une plus grande distance. La formation de déchirures ou la pénétration n'interviennent qu'après une plus grande déformation et sous un effort plus élevé.

Le vitrage feuilleté selon l'invention permet d'obtenir des propriétés de sécurité optimales et d'utiliser complètement les capacités de déformation de l'intercalaire plastique pour absorber l'énergie cinétique du corps, tout en permettant à celui-ci de céder son énergie sous forme d'un travail de fragmentation aussi important que possible des deux feuilles de verre. En outre, les forces de frottement entre couches entrent en jeu dans une plus grande mesure et absorbent de l'énergie sur une plus grande distance.

Par ces caractéristiques, l'invention ne permet pas seulement d'augmenter sensiblement la limite de pénétration mais aussi d'obtenir une résistance plus molle à l'impact de la tête, donc de réduire les risques de fracture du crâne ou des vertèbres cervicales. En outre le danger de blessure par érasion sur les fragments de la feuille de verre interne est diminué.

Dans les vitrages feuilletés connus qui montrent une adhérence élevée entre l'intercalaire et les feuilles de verre silicate, les propriétés biomécaniques sont déterminées par le
fait que des tensions excessives apparaissent le
long des lignes de rupture du verre, tensions
sous lesquelles la feuille s'étire, subit une striction puis se déchire. L'invention diminue fortement ces pointes de contraintes locales puisque
la solide adhérence avec les feuilles de verre
rigides a disparu au moins sur l'une des faces;
même limitée à une seule face, cette libération
permet déjà d'atténuer les écarts de la tension
sur une grande partie de la section des couches
de l'intercalaire.

Lorsque l'intercalaire feuilleté est constitué de deux couches, celle qui est placée au
contact de la feuille de verre silicate exposée au
choc possède avantageusement une épaisseur
supérieure à celle qui est placée au contact de la
feuille de verre silicate opposée. En raison de
cette construction asymétrique, est essentiellement la couche tournée vers le choc qui joue le
rôle d'absorbeur d'énergie. La structure
smectique des couches moléculaires de la
matière plastique joue ici un rôle important pour
légaliser les contraintes sur toute l'épaisseur de
la couche de sorte que les strictions provenant
de l'écoulement du matériau ne se développent
pratiquement que du côté qui adhère au verre.
Comme cette couche de l'intercalaire feuilleté
est solidement collée à la face du verre elle
remplit aussi pleinement son rôle de rétention
des éclats.

Le réglage de l'adhérence entres les différentes couches de l'intercalaire feuilleté peut
s'obtenir par des moyens connus, par exemple
par un traitement approprié de la surface des
feuilles constitutives, éventuellement le dépôt
d'un agent de séparation, et ceci en particulier
sous forme fluide ou par pulvérisation.

Dans une mise en oeuvre particulièrement
avantageuse de l'invention, on peut interposer
entre couches principales de l'intercalaire
feuilleté un film supplémentaire qui provoque
leur séparation lors d'une déformation.

Dans une variante particulièrement avantageuse, l'intercalaire feuilleté présente une structure à trois couches principales la couche
médiane possédant sur ses deux faces une adhérence atténuée aux couches extérieures. En
cas de déformation par choc, cette feuille
médiane se sépare de celles-ci sur ses deux
faces et, ainsi libérée, peut remplir pleinement
son rôle d'absorbeur d'énergie. Bien entendu, au
lieu d'avoir recours à un collage peu énergique
de cette âme absorbeuse d'énergie, il est encore
possible de placer sur chacune de ses deux
faces des films séparateurs qui jouent leur rôle
en cas de déformation. Cette mise en oeuvre de
l'invention utilisant une structure d'intercalaire
quintuple est celle qui conduit aux meilleures
performances biomécaniques.

Selon un développement avantageux de l'invention, applicable au cas où un film séparateur est interposé entre les couches principales,
on choisit pour le constituer une feuille cohérente fragile d'un matériau transparent ayant
une faible résistance à la déchirure. Les films en
question peuvent être collés solidement sur les
couches adjacentes, la libération de celles-ci
résultant de leur destruction sous forme de
petits fragments lors de la déformation du
vitrage, ce qui supprime la liaison entre couches
adjacentes. De façon avantageuse, le film
séparateur est constitué d'un matériau notablement plus fragile et déchirable que celui qui
constitue les couches voisines ou d'un matériau
qui possède une contrainte d'écoulement
notablement plus faible sous la même déformation.

Les vitrages feuilletés conformes à l'invention possèdent un ensemble d'avantages
très remarquables qui améliorent considérablement leurs propriétés biomécaniques, à savoir:

— absorption d'énergie maximale grâce à une
  utilisation optimale des capacités de
  déformation des couches plastiques
  libérées, l'âme éventuelle den particulier,
— possibilité d'utiliser, pour constituer la
  couche absorbeuse d'énergie, des matériaux
  dont les propriétés correspondent spécialement aux exigences biomécaniques,
— absorption auxiliaire de l'énergie des chocs
  par le frottement qui résulte du mouvement
  relatif des couches libérées au fur et à
  mesure que la déformation du vitrage augmente,
— absorption supplémentaire de l'énergie des
  chocs par des forces de cisaillement sur un
  plus grand nombre de collages entre les
  différentes couches.

Diverses formes de mise en oeuvre de l'invention seront décrites ci-dessous en référence
aux dessins. Ces derniers montrent, en coupe:

— Figure 1: un vitrage feuilleté avec intercalaire asymétrique à deux couches;
— Figure 2: un vitrage feuilleté avec intercalaire à deux couches et interposition d'un
  film séparateur;
— Figure 3: un vitrage feuilleté à intercalaire
  triple;
— Figure 4: un vitrage feuilleté à intercalaire
  quintuple;
— Figure 5: un vitrage analogue à celui de la

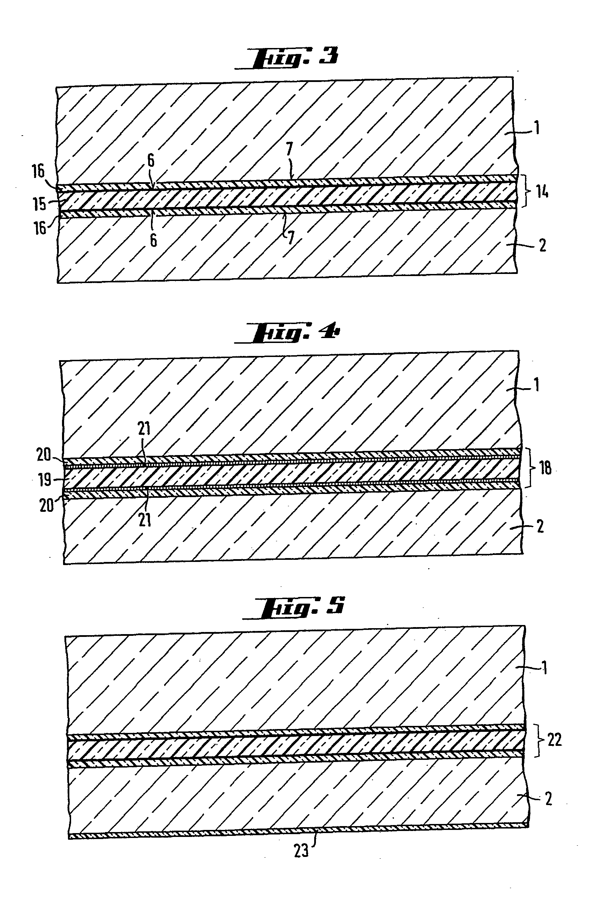

  figure 3, mais pourvu d'une couche
  auxiliaire de protection contre les éclats.

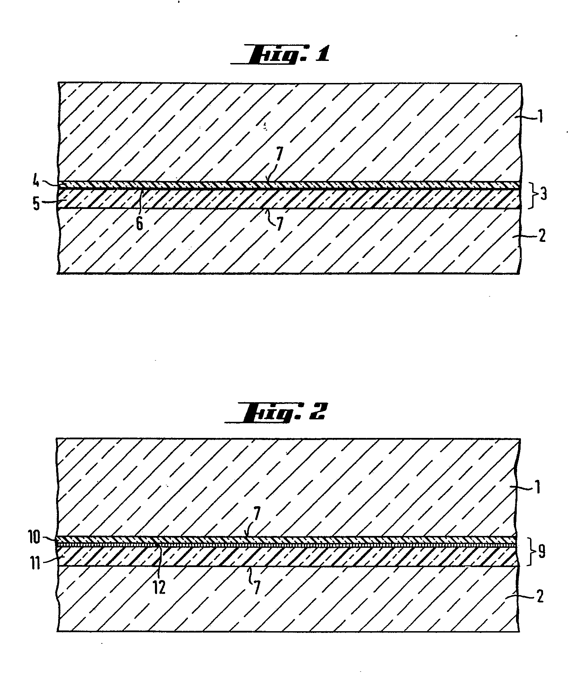

Dans la mise en oeuvre représentée sur la
Figure 1, le vitrage feuilleté, qui doit constituer
le pare-brise d'un véhicule automobile, comprend une feuille de verre silicate 1 d'une épaisseur de 3 mm, disposée vers l'extérieur du
véhicule, une feuille de verre silicate 2 d'une
épaisseur de 2 mm placée vers l'intérieur du
véhicule, et un intercalaire 3 composé de polyvinylbutyral et servant à l'assemblage des deux
feuilles de silicate.

L'intercalaire 3 est formé de deux couches 4 et 5, la couche 4 ayant une épaisseur inférieure à celle de la couche 5. Sur leur surface de contact 6, les couches 4 et 5 sont assemblées avec interposition d'un milieu séparateur approprié tel qu'une huile de silicone ou une composition analogue à celle décrite par le publication allemande DE—OS—28 09 440: elles peuvent donc se séparer sous l'effet d'une force de cisaillement s'exerçant le long de leur surface de contact 6 aussitôt que cette force de cisaillement dépasse une certaine limite. Sur leur surface 7, les feuilles de verre 1 et 2 sont au contraire soumises à un traitement augmentant leur adhérence, par exemple par dépôt d'un primaire approprié, ou plus simplement, si l'on utilise du polyvinylbutyral, par réduction du taux d'humidité autour de 0,2% à 0,4%. Sur la face 7, l'adhérence des feuilles intercalaires est réglée de telle façon qu'elle atteigne une valeur de 6 à 10 unités selon le test de PUMMEL; ceci correspond à une résistance au cisaillement de l'ordre de 20 à 30 kg/cm² mesurée selon le test de cisaillement ASTM D 3165-73 utilisé classiquement pour la mesure de la résistance des couches adhésives. La fabrication des échantillons et la mise en oeuvre du test sont également décrites dans ANALYSIS AND TESTING OF ADHESIVE BANDS, Academic Press, New York, San Francisco, London 1977, pages 10 et suivantes. Sur la face 6 qui sépare les deux feuilles 4 et 5 l'adhérence est au contraire selon le même test de 2 à 5 kg/cm².

La déformation du vitrage feuilleté qui se produit lors d'un accident avec choc sépare les couches le long de la surface 6, les couches 1 et 4 d'une part, 2 et 5 d'autre part restent solidement fixées l'une à l'autre. Si, par exemple, on utilise une couche 4 constituée d'une épaisseur de 0,19 mm de polyvinylbutyral, et une couche 5 d'une épaisseur de 0,57 mm de polyvinylbutyral, l'ensemble de la couche intercalaire 3 possède une épaisseur identique à celle utilisée sur les pare-brise classiques connus. Le traitement des surfaces 6, 7 selon l'invention permet cependant d'obtenir par rapport à ces derniers une amélioration de la résistance à la pénétration de l'ordre de 30% et une réduction de la formation d'éclats de l'ordre de 100%.

La figure 2 montre un autre exemple de mise en oeuvre utilisant un intercalaire 9 dissymétrique qui comprend une couche 10 d'une épaisseur de 0,2 mm, une couche 11 d'une épaisseur de 0,6 mm, toutes deux constitués de polyvinylbutyral, ainsi qu'un film séparateur 12 interposé entre elles.

Ce film permet de libérer les deux couches 10 et 11 par traction comme on le désire. Sur les surfaces 7, l'intercalaire 9 adhère fortement aux feuilles de verre 1 et 2. Le film séparateur 12 peut être un film très mince de polyester, d'un produit cellulosique ou de toute autre matière plastique transparente. Il possède une adhérence relativement faible sur les feuilles 10 et 11 de sorte que lors d'un accident avec projection provoquant la déformation du vitrage feuilleté, il faut que la couche épaisse 11 qui joue le principal rôle de freinage se sépare de la couche 10 qui retient les éclats.

Le film séparateur 12 peut être constitué d'une matière plastique relativement cassante qui ne possède qu'une faible résistance à la déchirure. La séparation des couches 10 et 11 provient alors de ce que, sous l'action de la déformation du vitrage feuilleté, les contraintes de traction et de cisaillement à l'intérieur du film 12 réduisent celui-ci, presque sans déformation, à l'état de petits fragments, alors que les couches 10 et 11 se déforment sous l'effet des efforts de traction qu'elles subissent, leur surface augmentant alors que le film 12 se détruit presque sans extension de sa surface.

La faiblesse voulue de la résistance à la rupture et à la déchirure du film séparateur peut être atteinte soit par le choix d'une épaisseur convenable, sout par la création systématique de zones affaiblies comme des lacunes ou par incorporation de produits étrangers et de charges. Une rupture fragile peut être obtenue à l'aide de tensions induites notamment par des procédés thermiques; ces tensions peuvent être augmentées, le cas échéant, par relargage de constituants à faible poids moléculaire. Il y a lieu d'utiliser, pour former le film intercalaire, des matériaux élastiques, durs et cassants, à haut degré de réticulation, tels que des polyesters réticulés ou des matériaux cristallins.

Le phénomène de séparation peut aussi être obtenu à l'aide d'un film séparateur constitué d'une matière plastique possédant une très faible contrainte d'écoulement, donc susceptible d'une déformation extraordinairement grande sous l'effet d'efforts limités. Les couches accolées à ce film séparateur étant alors constituées d'un matériau qui possède une faible contrainte d'écoulement nettement plus élevée, la séparation résulte de l'écoulement des couches moléculaires dans le film séparateur sous l'effet des tractions exercées sur l'intercalaire 9. Des matières de ce type sont caractérisées par un taux de réticulation extrêmement faible avec une structure moléculaire à couches parallèles de type smectique.

La figure 3 montre un exemple de mise en oeuvre correspondant à un intercalaire 14 de structure symétrique, possédant une âme 15 entourée de chaque côté par une couche 16. Les couches 15 et 16 sont constituées de polyvinylbutyral comme lors de la fabrication des vitrages conventionnels. Les couches 16 sont collées sur les feuilles de verre silicate adjacentes 1 ou 2 de façon à avoir une bonne adhérence le long de la surface de contact 7. L'adhérence le long de leur surface de contact 6 avec la couche 15 est suffisamment abaissée pour que les différentes couches de l'intercalaire se séparent les unes des autres le long de cette surface 6 lors d'une déformation du vitrage feuilleté. Les deux couches 16 adhèrent encore au verre, même en cas de déformation très importante et chacune d'elles retient les éclats, alors que l'âme 15, rendue indépendante le long des surfaces 6 joue son rôle d'absorbeur d'énergie.

Une autre forme d'exécution est représentée dans la figure 4. A la différence du dernier des exemples décrit précédemment, elle correspond à un intercalaire 18 constitué de cinq couches, à savoir l'âme absorbeuse d'énergie 19, les deux couches 20 destinées à retenir les éclats, les deux films séparateurs 21 placés entre les deux couches 19 et 20.

Les couches 19 et 20 peuvent à nouveau être constituées de polyvinylbutyral, mais la composition des couches 20 peut différer de celle de l'âme 19 de telle sorte que ces couches aient des propriétés optimales en ce qui concerne l'adhérence au verre et la rétention des éclats, alors que l'âme 19 est optimisée exclusivement en considération de ses propriétés biomécaniques. Les films séparateurs 21 peuvent être de très minces feuilles de polyester, d'un dérivé cellulosique ou d'un autre matériau plastique transparent. Ils adhèrent assez faiblement sur les feuilles adjacentes 19 et 20 pour permettre à la couche 19, qui joue un rôle biomécanique important, de se séparer des couches 20 qui retiennent les éclats lors de la déformation imposée au vitrage feuilleté par une projection résultant d'un accident.

Les films séparateurs 21 pourraient encore, le cas échéant, être constitués d'une matière plastique relativement cassante qui ne possède qu'une faible résistance à la rupture ou à la déchirure. La séparation des feuilles 19 et 20 résulterait encore, comme déjà indiqué à propos de la figure 2, des différences de propriétés élastiques entre ces films 21 et les couches adjacentes, constituées d'un matériau ayant, sous une même traction, une capacité de déformation très supérieure, grâce à une contrainte d'écoulement nettement plus faible.

Enfin, la figure 5 représente une variante qui se distingue par le fait que, sur la face du vitrage tournée vers l'intérieur du véhicule, la feuille de verre 2 est revêtue d'une couche 23 autocicatrisable, de protection contre les éclats, telle que celle décrite par exemple dans la publication de brevet allemande DE—AS—22 28 299. La feuille intercalaire 22 peut avoir une structure analogue à l'une de celles décrites dans les exemples précédents.

## Revendications

1. Vitrage feuilleté, en particulier pare-brise de véhicule, constitué de deux feuilles de verre silicate assemblées par collage sur une feuille intercalaire comprenant au moins deux couches principales en matière plastique, l'adhérence mutuelle entre ces couches principales étant notablement plus faible que l'adhérence de l'intercalaire sur les feuilles de verre, caractérisé en ce que l'adhérence entre lesdites couches de l'intercalaire est comprise entre 10 et 25% de l'adhérence entre l'intercalaire et les feuilles de verre, et ce sur l'ensemble de leur surface, de sorte qu'une courbure provenant d'une déformation de vitrage ne détruit pas l'adhérence de l'intercalaire sur les feuilles de verre, et que ce sont les couches principales de l'intercalaire qui se séparent l'une de l'autre.

2. Vitrage selon la revendication 1, caractérisé en ce que lesdites couches principales sont assemblées avec interposition d'un film séparateur.

3. Vitrage selon l'une des revendications 1 et 2, caractérisé en ce qu'il comprend des couches principales de propriétés différentes.

4. Vitrage selon l'une des revendications 1 à 3, caractérisé en ce que l'intercalaire comprend deux couches principales dont celle qui est placée au contact de la feuille exposée au choc possède une épaisseur supérieure à celle qui est placée au contact de la feuille de verre opposée.

5. Vitrage selon l'une des revendications 1 à 3, caractérisé en ce que l'intercalaire comprend trois couches principales.

6. Vitrage selon l'une des revendications 1 à 5, caractérisé en ce que les couches principales sont constituées de matériaux différents.

7. Vitrage selon l'une des revendications 1 à 6, caractérisé en ce que les couches adhérant aux feuilles de verre silicate sont des couches de polyvinylbutyral.

8. Vitrage selon la revendication 5, caractérisé en ce que les trois couches principales sont constituées de polyvinylbutyral.

9. Vitrage selon la revendication 2, caractérisé en ce que le film séparateur est constitué d'un milieu séparateur déposé superficiellement sous forme fluide ou pulvérisée.

10. Vitrage selon la revendication 2, caractérisé en ce que le film séparateur est constitué d'une feuille cohérente de matière plastique transparente.

11. Vitrage selon la revendication 10, caractérisé en ce que le film séparateur est constitué d'une feuille cohérente fragile d'un materiau transparent ayant une faible résistance à la déchirure.

12. Vitrage selon la revendication 10, caractérisé en ce que le film séparateur est constitué d'un matériau ayant dans les mêmes conditions de déformation, une contrainte d'écoulement plus faible que celle des feuilles adjacentes.

## Patentansprüche

1. Verbundglasscheibe, insbesondere Kraftfahrzeug - Windschutzscheibe, aus durch Verkleben mit einer Zwischenfolie miteinander verbundenen Silikatglasscheiben, wobei die Zwischenfolie wenigstens zwei Hauptschichten aus Kunststoff umfaßt, deren gegenseitige Haftung wesentlich geringer ist als die Haftung der Zwischenfolie an den Glasscheiben, dadurch gekennzeichnet, daß die Haftungswerte zwischen den Schichten der Zwischenfolie auf ihrer gesamten Oberfläche 10 bis 25% der Haftungswerte der Zwischenfolie an den Glasscheiben beträgt, so daß eine Auswölbung infolge einer Deformation der Scheibe die Haftung der Zwischenfolie an den Glasscheiben nicht zerstört, sondern sich die Hauptschichten der Zwischenfolie voneinander lösen.

2. Verbindglasscheibe nach Anspruch 1, dadurch gekennzeichnet, daß die Hauptschichten unter Zwischenschaltung einer Trennschicht miteinander verbunden sind.

3. Verbundglasscheibe nach einem der Ansprüche 1 und 2, dadurch gekennzeichnet, daß sie Hauptschichten mit unterschiedlichen Eigenschaften umfaßt.

4. Verbundglasscheibe nach einem der Ansprüche 1 bis 3, dadurch gekennzeichnet, daß die Zwischenfolie zwei Hauptschichten umfaßt, von denen diejenige, die mit der dem Stoß zugewandten Glasscheibe in Kontakt steht, eine geringere Dicke besitzt als diejenige, die in Kontakt mit der gegenüberliegenden Glasscheibe steht.

5. Verbundglasscheibe nach einem der Ansprüche 1 bis 3, dadurch gekennzeichnet, daß die Zwischenfolie drei Hauptschichten umfaßt.

6. Verbundglasscheibe nach einem der Ansprüche 1 bis 5, dadurch gekennzeichnet, daß die Hauptschichten aus verschiedenen Materialien bestehen.

7. Verbindglasscheibe nach einem der Ansprüche 1 bis 6, dadurch gekennzeichnet, daß die an den Silikatglasscheiben haftenden Schichten aus Polyvinylbutyral bestehen.

8. Verbundglasscheibe nach Anspruch 5, dadurch gekennzeichnet, daß die drei Hauptschichten aus Polyvinylbutyral bestehen.

9. Verbundglasscheibe nach Anspruch 2, dadurch gekennzeichnet, daß die Trennschicht aus einem Trennmittel besteht, das in flüssiger oder zerstäubter Form oberflächlich aufgetragen ist.

10. Verbundglasscheibe nach Anspruch 2, dadurch gekennzeichnet, daß die Trennschicht aus einer zusammenhängenden Folie aus transparentem Kunststoff besteht.

11. Verbundglasscheibe nach Anspruch 10, dadurch gekennzeichnet, daß die Trennschicht aus einer zusammenhängenden spröden Folie eines transparenten Materials mit niedrieger Reißfestigkeit besteht.

12. Verbundglasscheibe nach Anspruch 10, dadurch gekennzeichnet, daß die Trennfolie aus einem Material besteht, das bei gleichen Verformungsbedingungen eine niedrigere Fließspannung als die angrenzenden Schichten aufweist.

**Claims**

1. A laminated pane, such as a windscreen for a vehicle, comprising two sheets of silicate glass assembled together by adhesion to an intermediate sheet comprising at least two principal layers of plastics material, the mutual adhesion between these principal layers being notably less than the adhesion of the intermediate to the glass sheets, characterised in that the adhesion between said layers of the intermediate is from 10% to 25% of the adhesion between the intermediate and the glass sheets, over their whole surface, so that a curvature produced by deformation of the pane does not destroy the adhesion of the intermediate to the glass sheets and it is the principal layers of the intermediate which are separated one from the other.

2. A pane according to Claim 1, characterised in that said principal layers are assembled together with interposition of a separating film.

3. A pane according to one of Claims 1 and 2, characterised in that it comprises principal layers having different properties.

4. A pane according to one of Claims 1 to 3, characterised in that the intermediate comprises two principal layers of which that which is in contact with the sheet exposed to shock has a thickness greater than that which is in contact with the opposite glass sheet.

5. A pane according to one of Claims 1 to 3, characterised in that the intermediate comprises three principal layers.

6. A pane according to one of Claims 1 to 5, characterised in that the principal layers are composed of different materials.

7. A pane according to one of Claims 1 to 6, characterised in that the layers adhering to the sheets of silicate glass are layers of polyvinylbutyral.

8. A pane according to Claim 5, characterised in that the three principal layers comprise polyvinylbutyral.

9. A pane according to Claim 2, characterised in that the separating film comprises a separator medium deposited on a surface in fluid or powder form.

10. A pane according to Claim 2, characterised in that the separating film comprises a coherent sheet of transparent plastics material.

11. A pane according to Claim 10, characterised in that the separating film comprises a fragile coherent sheet of a transparent material having a low resistance to tearing.

12. A pane according to Claim 10, characterised in that the separating film comprises a material having under the same conditions of deformation, a flow stress which is lower than that of the adjacent sheets.

## *Fig. 1*

## *Fig. 2*

**Fig. 3**

**Fig. 4**

**Fig. 5**